# EUROPEAN PATENT APPLICATION

(11) **EP 1 703 395 A2**
(43) Date of publication of application: **20.09.2006**
(21) Application number: 05254408.7
(22) Date of filing: 14.07.2005
(51) Int. Cl.: G06F 11/07

(54) **Multiprocessor system with a management processor**

(30) Priority: 15.03.2005 JP 2005073300
(71) Applicant: FUJITSU LIMITED, Kawasaki-shi, Kanagawa 211-8588 (JP)
(72) Inventor: Yamaguchi, Kunio, Fujitsu Network Technologies Ltd, Yokohama-shi Kanagawa-ken (JP); Noyama, Mitsuhiro, Yokohama-shi Kanagawa-ken (JP); Kawasaki, Naoki, Fujitsu Network Technologies Ltd, Yokohama-shi Kanagawa-ken (JP); Kawamoto, Matsatsugu, Yokohama-shi Kanagawa-ken (JP)
(74) Representative: Fenlon, Christine Lesley

(57) **Abstract**

In a multiprocessor system in which a plurality of processors (2_n) are managed by a management processor (1), and an access to a shared memory (3) is controlled by a bus control device (4), the management processor or the bus control device provides to the processors time information synchronized at a time of a system start-up, and each of the processors collects its own running history information associated with the time information. Also, when detecting a fault, each of the processors stops a collection of its own running history information, and stops a collection of running history information of other processors by notifying the fault detection to the other processors. Each of the processors, after having stopped the collection of its own running history information, stores the running history information in a nonvolatile memory (5) provided other than the shared memory.

## Description

The present invention relates to a multiprocessor system, and in particular to a multiprocessor system in which a plurality of call processors provided within a wireless network control device of a mobile communication system are managed by a management processor.

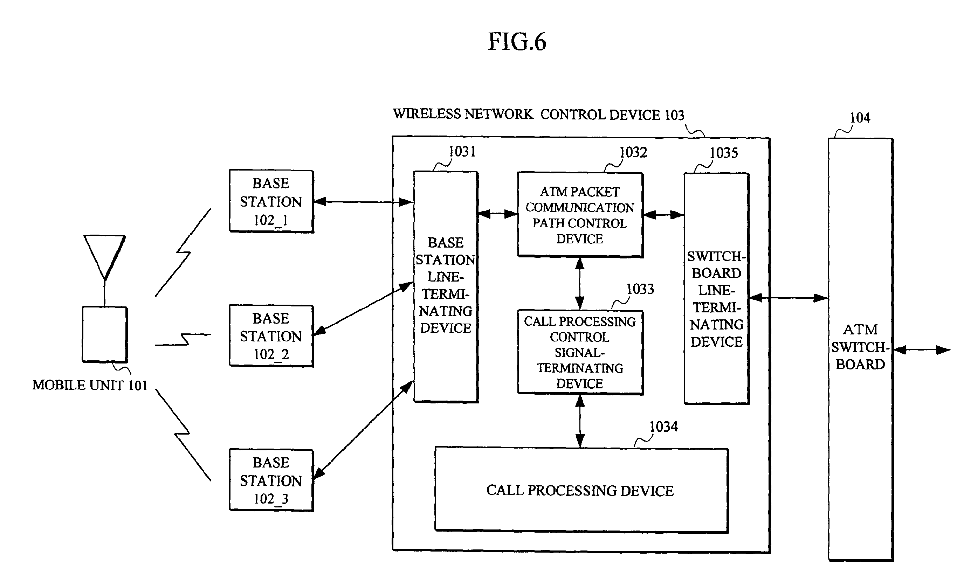

In call processing of a previously considered mobile communication system, it is required to follow traffic rapidly increased together with an expansion of mobile telephone services as well as a spread of enormous data communication of voice, image and the like in a wireless network, so that the call processing is performed by an arrangement as shown in Fig.6.

In Fig.6, a wireless network control device 103 controls base stations 102_1-102_3 (occasionally represented by a reference numeral "102") transmitting/receiving information to/from a mobile unit 101, an outgoing/incoming call connection and the like, and performs a protocol conversion of a user signal between the base station 102 and an ATM switchboard 104 connected to a fixed network. This wireless network control device 103, as shown in Fig.6, is composed of a base station line-terminating device 1031, an ATM packet communication path control device 1032, a call processing control signal-terminating device 1033, a call processing device 1034 and a switchboard line-terminating device 1035. The call processing device 1034 thereamong generally performs the call processing by composing a multiprocessor system in order to control the base stations 102 and the outgoing/incoming call connection, and to make a protocol termination.

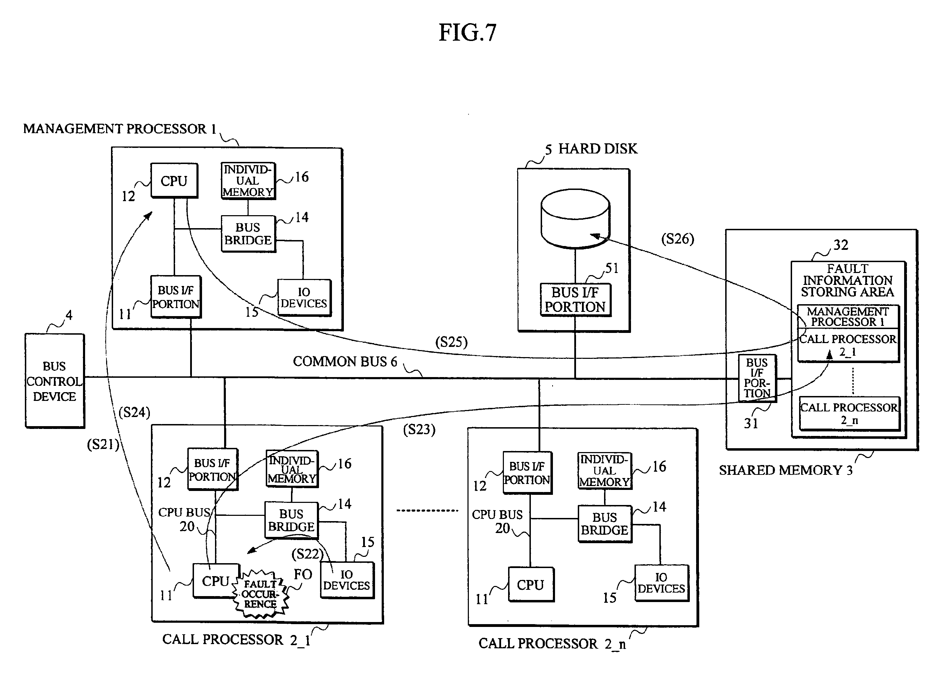

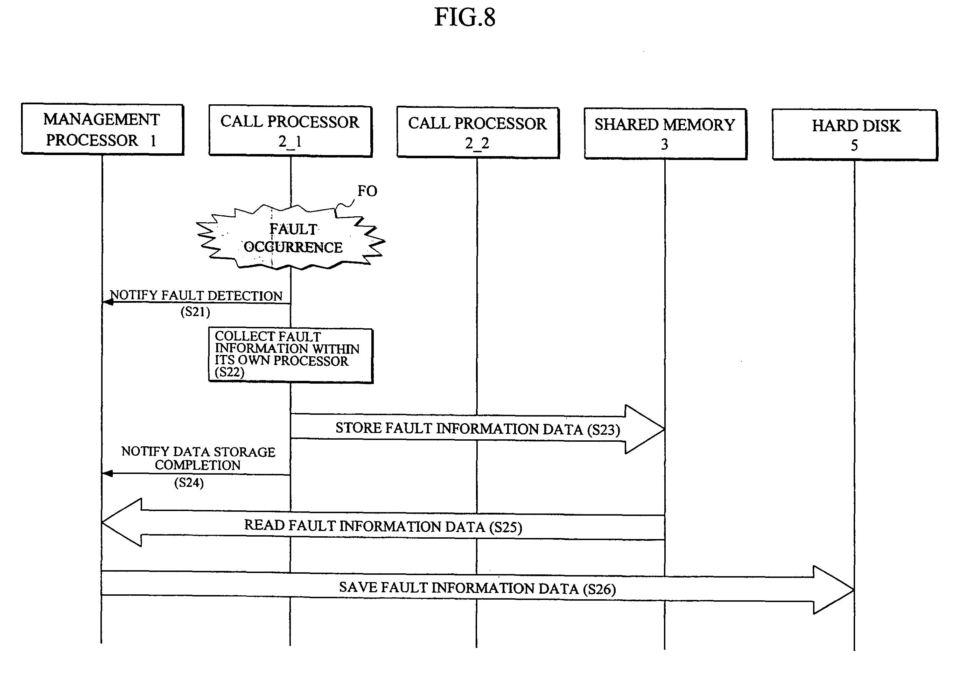

Hereinafter, a previously considered technology of a call processing device having a multiprocessor arrangement will be described referring to an arrangement shown in Fig.7 and its operation sequence shown in Fig.8.

The call processing device of the multiprocessor system is composed of a management processor 1, "n" units of call processors 2_1-2_n (hereinafter, occasionally represented by a reference numeral "2"), a shared memory 3, a bus control device 4 and a hard disk 5 connected through a common bus 6, where the management processor 1 manages the state of each of the call processors 2. The processors 1 and 2 are respectively composed of a bus I/F portion 11, a CPU 12, a bus bridge 14, IO devices (registers or the like) 15 and an individual memory 16.

When a fault occurs, e.g. the call processor 2_1 associated with a fault occurrence FO notifies a fault detection to the management processor 1 in order to collect information for analyzing the fault (at step S21). Also, the call processor 2_1 with the fault occurrence FO, by software mounted on the processor itself, collects information of the IO devices 15 (at step S22), and stores the information in its assigned area within a fault information storing area 32 of the shared memory 3 through the common bus 6 and the bus I/F portion 31 (at step S23).

After the call processor 2_1 which detected the fault occurrence FO has completed the storage of the fault information in the shared memory 3 (at step S23), the management processor 1 which has received the notification (at step S24) reads the fault information within the shared memory 3 by the software mounted on the management processor 1 itself (at step S25), and stores the information in the hard disk 5 through a bus I/F portion 51 (at step S26), thereby enabling a collection of the fault information.

When such a fault information collecting function is performed by hardware and a fault concurrently occurs in a plurality of call processors 2, the collection of the fault information is not stopped since the processors do not monitor a fault occurrence state mutually. Therefore, overwriting the information occurs when the fault information is outputted to the assigned call processor area of the shared memory 3. In order to avoid the overwriting, a sequence is composed by the software of the management processor 1 which monitors the fault occurrence state to collect the fault information.

Meanwhile, there are a high reliability system and device where a database is assigned so that a usage rate of a processor in each module becomes equal to or less than 50 %, a check point database is read from a semiconductor file device of a module where a fault has occurred, the database is restored based on log information after a check point time and transaction processing of the module where a fault has occurred is restarted (see e.g. patent document 1).

Also, there is an information processing device which is a bus trace circuit in a bus connecting a plurality of units, which has functions of detecting that specified transaction is retried predetermined times from the same unit, recognizing that a bus is a pseudo bus fault state based on the detection, storing bus traces of a predetermined number immediately before the pseudo bus fault recognition and also storing bus traces which occur after the pseudo bus fault recognition, which is provided with a main bus trace memory and a sub-bus trace memory storing bus traces, wherein bus traces of a predetermined number immediately before the pseudo bus fault recognition are stored in the sub-bus trace memory (see e.g. patent document 2).

Also, there is a bus monitoring circuit of an information processing device in which a fault detection circuit outputs, when detecting a fault in an input/output bus, data in which bits corresponding to the fault is made "1", a register holds data in which bits corresponding to a fault for which a stop signal is to be outputted to a memory control circuit are made "1", an AND circuit takes AND per bit between data from the detection circuit and data from the register, an OR circuit outputs a stop signal to a control circuit if a single set of bits where AND is established exists, the memory control circuit constantly takes in addresses, data and control signals from the bus to be stored, stops taking in the signals if a stop signal is inputted, and holds information processing taken in from the input/output bus for a fixed period before a fault occurrence (see e.g. patent document 3).

Also, there are a bus trace device connected to a system bus and tracing bus information necessary for a fault detection, and a bus trace method, in which a large capacity of trace memory composed of a DRAM of a 2-memory block system and a high-speed trace memory are provided as bus trace memories storing trace data, and a bus trace control circuit controls a trace operation according to a condition of a start and a stop of a trace set by an SVP 4 and controls a writing operation of the trace memory (see e.g. patent document 4).

Also, there is a history recoding device which can record various internal information and only effective input information from the outside while a time relationship between information (hereinafter, occasionally referred to simply as internal information) concerning an internal operation of a data processing device and information {information from main storage device, or information from input/output device} inputted from the outside of the data processing device is clarified (see e.g. patent document 5).

Also, there is an information processing device including a central processing device, a main storage device, an information processing system in which at least a single peripheral control device is connected with a system bus and composed, and a diagnosing device detecting a fault which has occurred within the concerned system, in which system bus tracing means are provided in either the central processing device or the main storage device, the system bus tracing means tracing the information on the system bus are also provided in the diagnosing device, when a primary fault has occurred in the system, the bus tracing means provided in either the central processing device or the main storage device trace the fault information, and when a secondary fault has occurred thereafter, the system bus tracing means provided in the diagnosing device trace the fault information of the concerned secondary fault (see e.g. patent document 6).

Also, there is a fault information collecting method in a computer system in which fault processing is performed by a nonvolatile storage device storing an order of writing and a check circuit checking a fault presently occurring without writing data that have been already written in the nonvolatile storage device, whereby a time for writing in the nonvolatile storage device is reduced, and a time until the fault recovers is shortened (see e.g. patent document 7).

Also, there are method and system for extracting parallel dump of fault information in a multiprocessor system in which a first processor having detected a fault occurrence instructs a second processor to extract fault information when fault information is extracted at the time of a fault detection, each of the processors independently extracts fault information respectively to store the fault information in a file device respectively, the second processor notifies, when the fault information extraction has been completed, the fact to the first processor, and the first processor restarts with the completion of the information extraction in all of the processors (see e.g. patent document 8).
[Patent document 1] Japanese Patent Application Laid-open No.8-278909
[Patent document 2] Japanese Patent Application Laid-open No.2004-54685
[Patent document 3] Japanese Patent Application Laid-open No.5-94384
[Patent document 4] Japanese Patent Application Laid-open No.8-263328
[Patent document 5] Japanese patent No.2707879
[Patent document 6] Japanese Patent Application Laid-open No.2001-256081
[Patent document 7] Japanese Patent Application Laid-open No.2001-337849
[Patent document 8] Japanese Patent Application Laid-open No.11-338838

A fault information collection method which monitors a fault occurrence state by composing a sequence by the software of the management processor like a shared memory-type multiprocessor shown in Fig.7 has problems as follows:
(1) Since the call processor except the call processor having detected a fault collects no information (fault information) of IO devices at the time of the fault occurrence, it is difficult to analyze a cooperative or interrelated operation of all of the processors.
(2) Since the fault information is collected with a fault detection as a trigger, information before the fault occurrence can not be obtained, so that it becomes difficult to analyze the fault.
(3) Since the collected fault information is stored in the shared memory through the common bus, the fault information can not be stored in the shared memory when a fault has occurred in the common bus.
(4) When information can not be saved in an external storage device such as a hard disk due to a fault, the information accumulated in a register or the like of the IO devices concerning the fault is reset or cleared.
(5) Since the fault information is collected by the software, the software does not start up due to a runaway of the software, or credibility of the collected fault information becomes low.

It is desirable to provide a multiprocessor system, considering the above-mentioned problems, which enables an analysis of a cooperative operation of all of the processors up to a fault occurrence when a fault occurs in a certain processor.

One embodiment of an aspect of the present invention can provide a multiprocessor system comprising: a plurality of processors; a management processor managing the processors; a shared memory; and a bus control device controlling an access to the shared memory; the management processor or the bus control device providing to the processors time information synchronized at a time of a system start-up; and each of the processors collecting its own running history information associated with the time information.

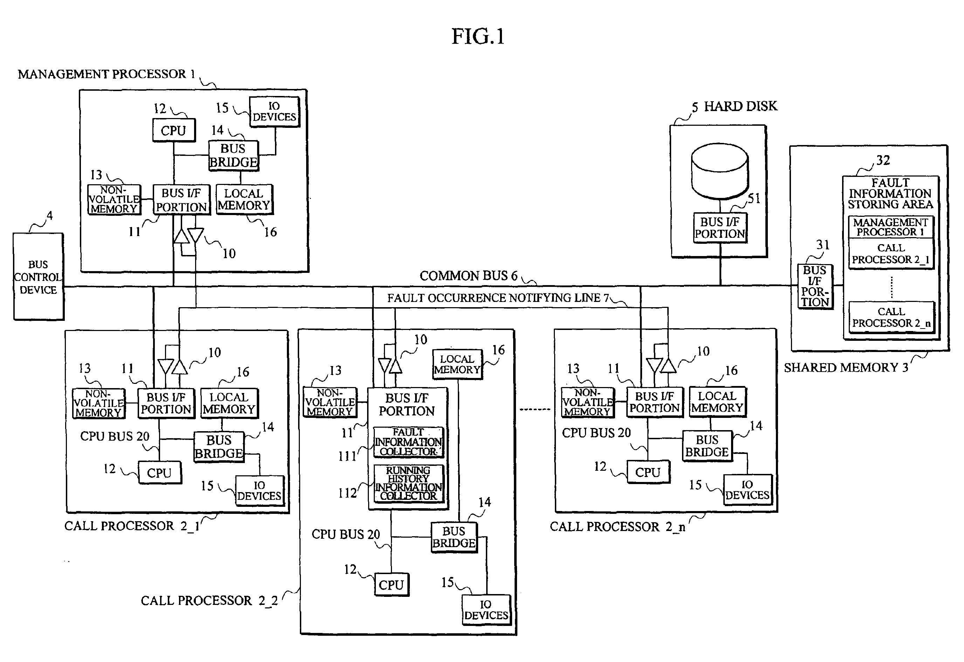

Fig.1 schematically shows an example in which a multiprocessor system according to an embodiment of the present invention is applied to a call processing device of a mobile communication system in the same way as the previously considered example of Fig.7, and is provided with, different from Fig.7, a fault information collector 111 and a running history information collector 112 in the bus I/F portion 11 within each of the processors.

When a system power is turned on or a system is started up at a system restart or the like, in the multiprocessor system according to the present invention, a management processor 1 firstly provides, to all of processors 2, synchronized time information common to each of the processors. In each of the processors 2, the running history information collector 112 constantly collects (traces) running history information on a CPU bus 20 associated with the time information, thereby enabling the collection of information before a fault occurrence.

Also, when detecting a fault, each of the processors 2 may stop a collection of its own running history information, and may stop a collection of running history information of other processors by notifying the fault detection to the other processors.

Furthermore in an embodiment of the present invention, by a multi-connection between the management processor 1 and each of the processors 2_1-2_n with a fault occurrence notifying line 7, a fault occurrence notification detected by a processor where a fault has occurred can be notified to other normal processors.

Thus, by having a function of stopping the collection of the running history information of its own processor triggered by a fault occurrence of another processor notified through the fault occurrence notifying line 7, overwriting of the running history information in a normal processor can be prevented at the time of the fault occurrence of another processor.

Also, each of the processors, after having stopped the collection of its own running history information, may store the running history information in a nonvolatile memory provided other than the shared memory.

Thus, it becomes possible to reliably collect the running history information even if a fault occurs in the shared memory.

The above-mentioned running history information includes an R/W type, a running address, R/W data, time information synchronized between all the processors, and a function No. indicating a type of the processor.

As for the information, the running history information is constantly collected and stored in the nonvolatile memory, so that collection stop of the running history information and the prohibition of overwriting are realized at the time of the fault occurrence, thereby enabling an analysis of an operation in a state up to a fault occurrence in cooperation with a plurality of processors without clearing the fault information even upon restart by an exchange of the processors and a system reset after the fault occurrence, or upon turning the power off.

In embodiments of the present invention, the following effects can be obtained.
(1) Since the running history information associated with the time information synchronized with all of the processors is collected, it becomes possible to analyze a cooperative operation of all of the processors up to the fault occurrence.
(2) Hardware constantly traces a running address of software, thereby enabling a software running history up to the fault occurrence to be obtained and an analysis of an operation before a fault occurrence to be performed.
(3) Since collected fault information is autonomously stored in the nonvolatile memory within each of the processors by the hardware, the fault information can be reliably obtained even if a fault occurs in a common bus, and the information can be held even if the power is turned off or the system is reset.
(4) Even if running of the software is disabled, it becomes possible to reliably collect the fault information and to take out the collected information data, which further increases patterns of the fault data which can be analyzed.
(5) The autonomous collection of the fault information by the hardware does not influence the operation (performance or the like) at a normal time since it operates only at the time of restart.

The above and other advantages of the invention will be apparent upon consideration of the following detailed description of the invention by way of example, taken in conjunction with the accompanying drawings, in which the reference numerals refer to like parts throughout and in which:
Fig.1 is a block diagram schematically showing a multiprocessor system according to an embodiment of the present invention;
Fig.2 is a block diagram showing an embodiment of a multiprocessor system according to an embodiment of the present invention;
Fig.3 is an operation sequence diagram of the embodiment shown in Fig. 2;
Fig.4 is a format diagram of running history information used in an embodiment of the present invention;
Figs.5A, 5B and 5N are diagrams showing examples of a fault information collection in embodiments of the present invention;
Fig.6 is a block diagram showing a general arrangement of a mobile communication system to which embodiments of the present invention are applied;
Fig.7 is a block diagram showing a previously considered call processing device in a mobile communication system; and
Fig.8 is an operation sequence diagram of the example shown in Fig.7.

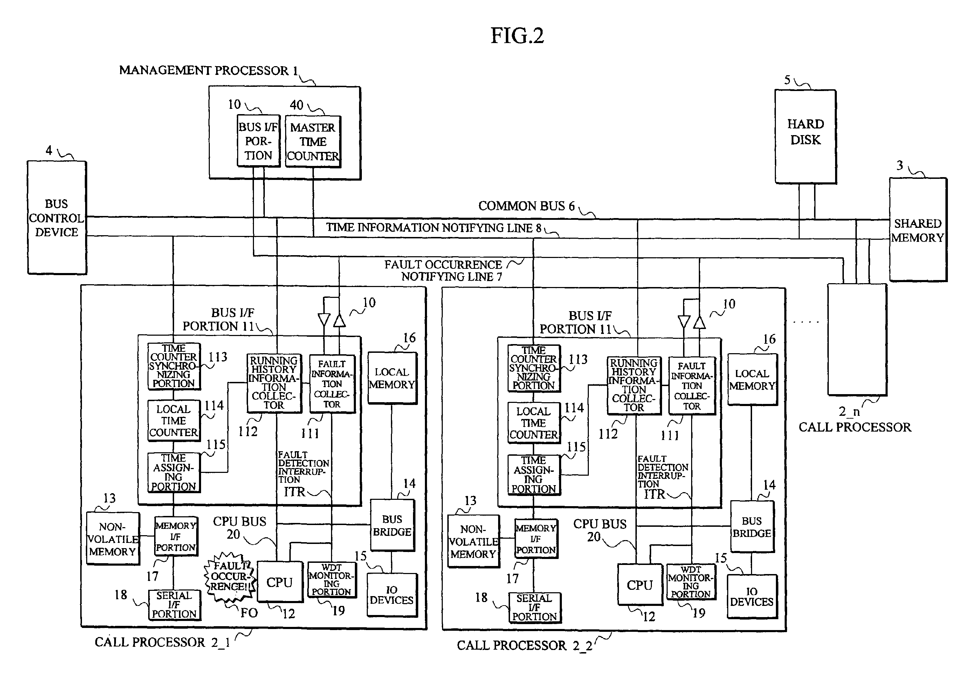

Fig.2 specifically shows the multiprocessor system according to an embodiment of the present invention schematically shown in Fig.1, and shows an embodiment in a case where the multiprocessor system is applied to the call processing device within the mobile communication system in the same way as Fig.1.

In this embodiment, a multi-connection between the management processor 1, the call processors 2_1-2_n, the shared memory 3, the bus control device 4 and the hard disk 5 is performed with the common bus 6 and the time information notifying line 8, and a multi-connection between the processors 1 and 2 is performed with the fault occurrence notifying line 7.

Also, the management processor 1 is provided with a master time counter 40. Within the bus I/F portion 11, each of the call processors 2 has, as shown in Fig.1, the fault information collector 111 connected to the fault occurrence notifying line 7 through a bidirectional driver 10, the running history information collector 112 connected to the common bus 6 as well as a time counter synchronizing portion 113, a local time counter 114 and a time assigning portion 115 connected to the time information notifying line 8 in series. The time assigning portion 115 is connected to the running history information collector 112, and is also connected to the nonvolatile memory 13 such as a flash memory through a memory I/F portion 17 and a serial I/F portion 18.

Also, the fault information collector 111 is connected to the running history information collector 112, and is further connected to a CPU 12 and a watch dog timer (WDT) monitoring portion 19. The CPU 12 is also connected to the running history information collector 112, and is further connected to the bus bridge 14 through the CPU bus 20. The bus bridge 14 is connected to the IO devices (register or the like) 15 and the local memory 16.

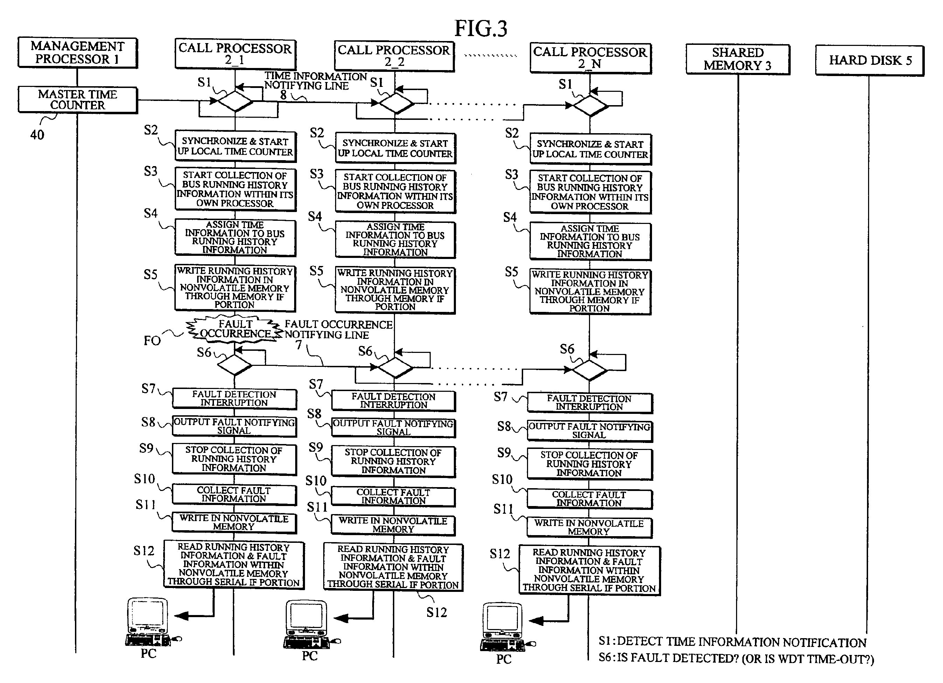

Hereinafter, the operation of the embodiment shown in Fig.2 will be described referring to the operation sequence diagram shown in Fig.3.

Firstly, when the system power is turned on or the system is rebooted (restarted or the like), a master time is notified to each of the processors 2 through the time information notifying line 8 from the master time counter 40 within the management processor 1. It is to be noted that the master time counter 40 may be provided within the bus control device 4.

Each of the processors 2 having detected the time information (at step S1) synchronizes the time information in the time counter synchronizing portions 113 of the respective bus I/F portions 11 in order to have the time information synchronized between the processors 2, and starts time count at the local time counter 114 (at step S2).

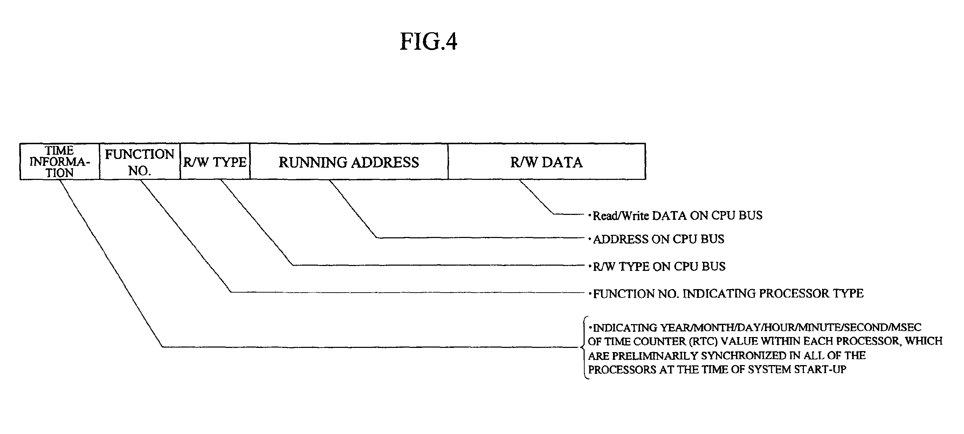

Hereafter, the running history information collector 112 within each of the processors 2 constantly starts the collection of the information on the CPU bus 20 of its own processor (at step S3), transmits the running history information to the time assigning portion 115, converts the information into a running history information format shown in Fig.4 by adding the time information to the running history information at the time assigning portion 115 (at step S4), once buffers the information in a write buffer (not shown) within the memory I/F portion 17 (at step S5), and constantly stores the information in the nonvolatile memory 13.

Hereinafter, information collecting operation in a case where a fault has occurred in the call processor 2_1 will be described.

Firstly, when the CPU 12 detects a fault occurrence FO due to a hardware fault or a software fault, or when the watch dog timer monitoring portion 19 becomes time-out (at step S6), a fault detection interruption ITR is provided to the fault information collector 111 (at step S7), and a fault information collection command is provided. The fault information collector 111 of the processor 2_1 having received the fault information collection command provides the fault information collection command (fault notifying signal) through the fault occurrence notifying line 7 to the other processors 2_2-2_n (at step S8).

Also, the CPU 12 commands its own running history information collector 112 to stop collecting the running history information. The running history information collector 112 having received the command of the collection stop of the running history information stops the collection of the running history information on the CPU bus 20 (at step S9). It is to be noted that the running history information collection up to the time when the fault occurred has been completed at this time.

After having collected the running history information, the fault information collector 111 collects fault information of its own IO devices 15, bus bridge 14 and CPU 12 from the CPU bus 20 through the running history information collector 112 (at step S10). The fault information collected (fault information of IO devices 15, bus bridge 14 and CPU 20) and the fault information of the bus I/F portion 11 are transmitted to the time assigning portion 115 from the running history information collector 112, and the time information is assigned thereto. The information is once buffered in the write buffer within the memory I/F portion 17, and is then stored in the nonvolatile memory 13 (at step S11). It is to be noted that for collecting the fault information, a bus (I/F) different from the CPU bus 20 may be used.

On the other hand, the call processor 2_1 having received the notification of the fault information collection command from the fault occurrence processor (call processor 2_1 in this example) through the fault occurrence notifying line 7 notifies the running history information collection-stop command to the running history information collector 112 from the fault information collector 111 through the bidirectional driver 10. The running history information collector 112 having received the running history information collection stop command stops the running history information collection of the running history information on the CPU bus 20 (at step S9).

After having stopped the running history information collection, the fault information collector 111 collects the fault information of its own IO devices 15, bus bridge 14 and CPU 20 on the CPU bus 20 through the running history information collector 112 (at step S10). The fault information collected and the fault information of the bus I/F portion 11 are transmitted to the time assigning portion 115 from the running history information collector 112, the time information is assigned thereto. The information is once buffered in the write buffer within the memory I/F portion 17, and is then stored in the nonvolatile memory 13 (at step S 11). Also in this case, a bus I/F different from the CPU bus 20 may be used for the fault information collection.

Furthermore, the same processing is performed to the other processors 2_3-2_n.

Thus, as for the other processors 2_1-2_n, the collection of the running history information to which the time information is assigned is stopped, and the fault information is stored in the nonvolatile memory 13, thereby enabling running history data of the processor where the fault has occurred before the occurrence of the fault to be acquired and an operation state in the other normal processors at the time of the fault occurrence to be analyzed.

Namely, it is possible to read the information of the nonvolatile memory 13 within each of the processors 2 from a serial (I/F portion 18) port and an Ethernet (registered trademark) interface provided in each of the processors 2 through the memory I/F portion 17. Also, it is possible to read data with the nonvolatile memory 13 removed.

Thus, even when a fault has occurred in the shared memory 3 and the common bus 6, a fault analysis can be performed. Thus, a problem that the fault information can not be collected when a fault has occurred in the common bus 3 is solved.

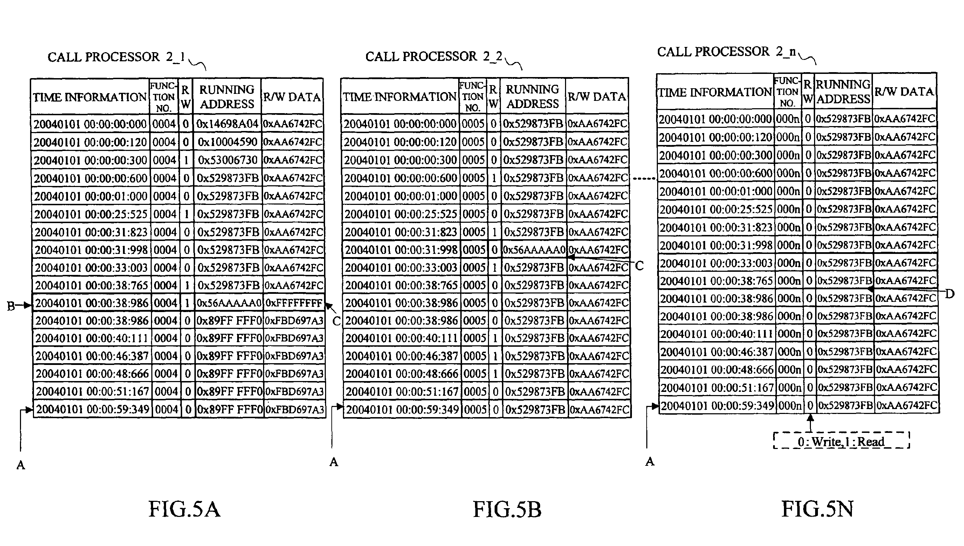

Hereinafter, the fault information obtained by performing the processing will be described referring to an example of the fault information collection shown in Figs.5A, 5B and 5N.

Firstly, it is recognized that the running history information collection is stopped by confirming the running history information of the last time point of each of the processors 2 (A).

Secondly, if the call processor 2_1 where the fault has occurred is confirmed, it is recognized that when "0x56AAAAAO" is "read", error data of the R/W data (C) occurs in (B) and the call processor 2_1 runs away triggered by the error data. Also, since the running history information collection is performed for some time after the runaway, it can be determined that a cause of a fault in the call processor 2_1 is a WDT timeout.

Then, the running history information collection of the other processors 2_2-2_n when the fault has occurred in the call processor 2_1 is confirmed. For example, if the call processor 2_2 is noticed, it is recognized that a value "written" in the shared memory 3 is different from a value "read" from the same address by the call processor 2_1 at a subsequent time (C). If the information of the other processors (represented by a call processor 2_n in this example) is confirmed, it is recognized that no call processor exists (D) which has rewritten the data of the address from the time when "Ox56AAAAAO" of the shared memory 3 is written by the call processor 2_2 to the time when the call processor 2_1 "reads".

As mentioned above, information A-D accumulated in the call processors can be analyzed from the time information. In the fault taken as an example this time, when the call processor 2_1 performs a "read" access to "0x56AAAAA0", data becomes error, and the analysis until the software runs away as a result is made possible.

Furthermore, when the same data error exists in each of the processors for the data of the same address on the shared memory until the WDT timeout, it is possible to analyze that data corruption on the shared memory or inappropriate acquisition of data due to a fault on the common bus can be considered.

It will be appreciated by those skilled in the art that the invention has been described by way of example only, and that a variety of alternative approaches may be adopted without departing from the scope of the invention, as defined by the appended claims.

## Claims

1. A multiprocessor system comprising:
a plurality of processors;
a management processor managing the processors;
a shared memory; and
a bus control device controlling an access to the shared memory;
the management processor or the bus control device providing to the processors time information synchronized at a time of a system start-up; and
each of the processors collecting its own running history information associated with the time information.

2. The multiprocessor system as claimed in claim 1, wherein when detecting a fault, each of the processors stops a collection of its own running history information, and stops a collection of running history information of other processors by notifying the fault detection to the other processors.

3. The multiprocessor system as claimed in claim 2, wherein the fault detection is notified through a fault detection notifying line.

4. The multiprocessor system as claimed in claim 2, wherein each of the processors, after having stopped the collection of its own running history information, stores the running history information in a nonvolatile memory provided other than the shared memory.

5. The multiprocessor system as claimed in claim 1, wherein the running history information includes a read/write type, a running address, read/write data and a processor type.
